Europäisches Patentamt

European Patent Office

Office européen des brevets

(19)

(11) **EP 0 885 685 A1**

(12) **EUROPEAN PATENT APPLICATION**
published in accordance with Art. 158(3) EPC

(43) Date of publication:
23.12.1998 Bulletin 1998/52

(21) Application number: 96925961.3

(22) Date of filing: 31.07.1996

(51) Int. Cl.$^6$: **B23K 26/06**

(86) International application number:
PCT/JP96/02159

(87) International publication number:
WO 97/04917 (13.02.1997 Gazette 1997/08)

(84) Designated Contracting States:
DE

(30) Priority: 02.08.1995 JP 216676/95

(71) Applicant: KOMATSU LTD.
Minato-ku Tokyo 107 (JP)

(72) Inventors:
• YOSHIDA, Koji,
Komatsu Research Laboratory
Hiratsuka-shi, Kanagawa 254 (JP)

• MORI, Akira,
Komatsu Research Laboratory
Hiratsuka-shi, Kanagawa 254 (JP)

(74) Representative:
Meissner, Peter E., Dipl.-Ing.
Meissner & Meissner,
Patentanwaltsbüro,
Hohenzollerndamm 89
14199 Berlin (DE)

(54) **LASER MARKER**

(57)    The present invention is a laser marker which is capable of quickly marking even workpieces having different marking heights without deteriorating marking accuracy. In the laser marker (1) for marking the surface of a workpiece (4) by projecting a laser beam (2) having various pattern information onto the surface of the workpiece (4) through a condenser lens (52) and a glass plate(s) (53) for changing the focusing distance of the condenser lens, the glass plate(s) (53) is(are) stored in a housing (5) together with the condenser lens (52). A single glass plate or a plurality of glass plates (53A, 53B, 53C) having different thicknesses are used and a first glass plate drive unit (53) for moving the glass plate or one of the glass plates into and out of a laser beam path is provided.

F I G. I

1 LASER MARKER
5 HOUSING
51 REFLECTING MIRROR
52 CONDENSER LENS
53 GLASS PLATE
54 MOVABLE LENS
55
2 LASER BEAM
533
Z
SUPPORT PLATE 531
CENTER AXIS 532
530 FIRST GLASS PLATE DRIVE UNIT

EP 0 885 685 A1

## Description

Detailed Description of the Invention

[Field of the Invention]

This invention relates to a laser marker which is capable of adjusting marking height quickly even for workpieces having different marking heights.

[Related Arts]

A laser marker projects a laser beam having various pattern information onto the surface of a workpiece through a condenser lens and marks various patterns on the surface of the workpiece. Basically, the laser marker comprises a laser oscillator, means for providing various pattern information to the laser beam of this laser oscillator and a condenser lens for converging the laser beam from this means.

As the means for providing various pattern information to the laser beam of the laser oscillator, there is available a laser beam transmission mask which shows a desired pattern and is arranged between the laser oscillator and the condenser lens. Another example is such that a laser beam modulator and an XY deflector are arranged between the laser oscillator and the condenser lens in the order named so that modulation and deflection are synchronously controlled by a controller in accordance with a desired pattern. In an either example, a laser beam incident to the condenser lens has various pattern information.

It is usual that workpieces differs in height (i.e., marking height) according to type. When a change in marking height is within the focusing depth of the condenser lens, there is no problem., However, when a change in marking height is beyond the focusing depth of the condenser lens, marked patterns become unclear. Then, as a laser marker which is capable of adjusting marking height, there are known laser markers which comprise focusing distance control means for controlling the focusing distance of this condenser lens, attached to the condenser lens, as exemplified by laser markers (refer to JP-U-133891/1988 (the term "JP-U" as used herein means an "unexamined published Japanese utility model application")) which utilize an autofocusing unit and a glass plate for adjusting a laser beam path length.

The former prior art which utilizes an autofocusing unit detects the distance between a condenser lens and the surface of a workpiece and corrects the position of the condenser lens or the workpiece.

The latter prior art, as shown in Fig. 8, is constituted such that a glass plate 10 is arranged such that it can freely go in and out from a laser beam path below an unshown condenser lens. Thereby the focusing distance of the condenser lens is extended by $d = t (1 - n^{-1})$ and the image forming position is extended by the same distance d (from point A to point B) to prevent the occurrence of the above problem. In the above equation, t is a thickness of the glass plate 10 and n is a refractive index of the glass plate 10. The glass plate 10 is exposed outside.

Although the autofocusing unit of the former prior art as the focusing distance control means makes it possible to adjust the focusing distance very accurately, it is complicated in structure and expensive because it detects the distance between the condenser lens and the surface of a workpiece and corrects the position of the condenser lens or the workpiece.

In contrast, the latter prior art which utilizes a glass plate as the focusing distance control means is simple in structure and inexpensive. In addition, its maintenance and inspection are easy because the glass plate is exposed outside.

However, the glass plate cannot withstand long-time use as it is. That is, in a laser marker, an anti-reflection coating for a laser beam is applied to the surface of an optic such as a condenser lens to prevent the attenuation of a laser beam whereby a reduction in marking accuracy is prevented. Therefore, firstly, when the glass plate is directly used as it is, a laser beam is reflected on the surface of the glass plate, resulting in the production of an energy loss. Secondly, even when an anti-reflection coating for a laser beam is applied to the surface of the glass plate, dust adheres to and accumulates on the coating surface because the glass plate is exposed outside and burnt together with the coating by a laser beam. This causes such a problem as a reduction in marking accuracy.

Summary of the Invention

It is an object of the present invention which is aimed to solve the above problems of the prior art to provide a laser marker which is capable of quickly marking even workpieces having different marking heights without deteriorating marking accuracy.

In the laser marker of the present invention which projects a laser beam having various pattern information onto the surface of a workpiece through a condenser lens and a glass plate(s) for changing the focusing distance of this condenser lens and marks the various patterns on the surface of the workpiece, the glass plate(s) is(are) stored in a housing together with the condenser lens.

A single glass plate or a plurality of glass plates having different thicknesses are used. The laser marker of the present invention comprises a first glass plate drive unit for moving the glass plate or one of the glass plates into and out of a laser beam path. Stated more specifically, a plurality of glass plates are set in a support plate for supporting them substantially on the same plane therewith and the center axis of the support plate is driven to move one of the glass plates into and out of the laser beam path.

The laser marker of the present invention further comprises a second glass plate drive unit for driving the center axis of a support plate in which a plurality of glass plates are set, separately from the above glass plates and in parallel to the above glass plate, in such a manner that they are supported substantially on the same plane therewith, to move one of the glass plates into and out of the laser beam path. Each support plate may have a hole in which no glass plate is set.

According to the above constitution, since a glass plate(s) is(are) stored in the housing together with the condenser lens, dust is prevented from adhering to or accumulating on the coating of the glass plate(s).

In the case of only one glass plate, the first glass plate dive unit is driven to move this glass plate into and out of the laser beam path. In the case of a plurality of glass plates, a desired one is selected from among the plurality of glass plates and moved into and out of the laser beam path likewise. In other words, the optimal marking height can be quickly obtained for each workpiece having a different marking height by driving the first glass plate drive unit.

The space for introducing the glass plate into the laser beam path is a limited narrow space between optical elements such as a condenser lens and a movable lens in many cases. However, since the laser marker of the present invention is structured such that the plurality of glass plates having different thicknesses are set in the support plate for supporting them substantially on the same plane therewith and the support plate is driven to move one of the glass plates into and out of the laser beam path, the plurality of glass plates can be effectively arranged in the limited narrow space between optical elements and can be switched.

Since the laser marker of the present invention further comprises the second glass plate drive unit for driving a plurality of glass plates having different thicknesses, separately from the above glass plates and in parallel to the above glass plates, which are set in the support plate, the extension of the image forming position can be finely adjusted.

In addition, since each of the support plates of the first glass plate drive unit and the second glass plate drive unit has an empty hole in which no glass plate is set, the rough and fine adjustments of the extension of the image forming position can be performed independently.

Brief Description of the Drawings

Fig. 1 is a partial sectional view of a laser marker according to Embodiment 1 of the present invention;
Fig. 2 is a plan view of a support plate fitted with glass plates when seen from a direction Z of Fig. 1;
Fig. 3 is an entire view showing the appearance of the laser marker;
Fig. 4 is a diagram for explaining a change in image forming position in Embodiment 1;
Fig. 5 is a flow chart of the operation of Embodiment 1;
Fig. 6 is a partial sectional view of a laser marker according to Embodiment 2 of the present invention;
Fig. 7 is a plan view of a support plate fitted with glass plate when seen from a direction Y of Fig. 6; and
Fig. 8 is a diagram for explaining a change in image forming position caused by the glass plate of the prior art.

Description of the Preferred Embodiments

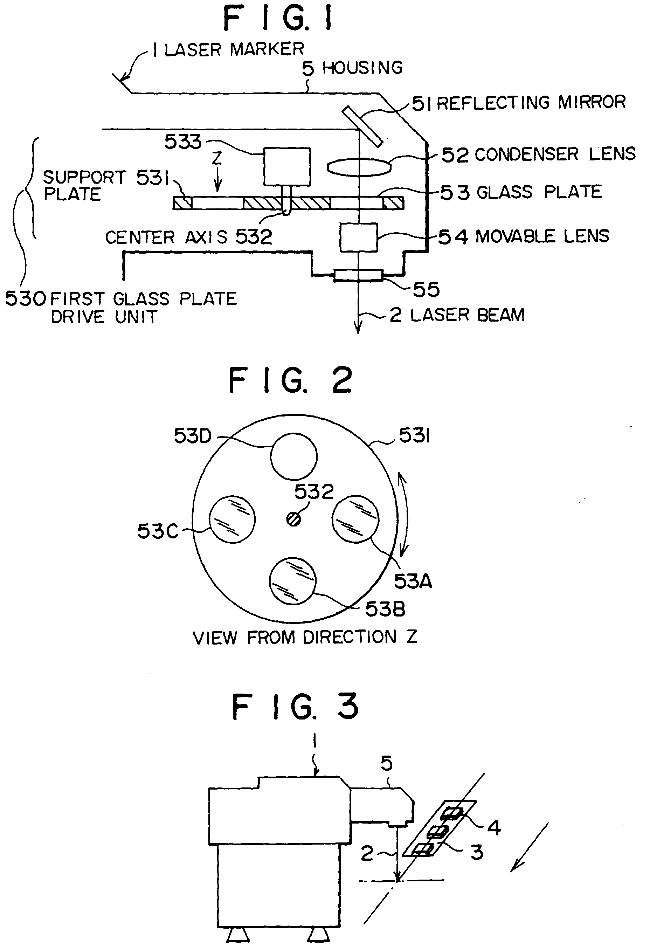

A laser marker according to Embodiment 1 of the present invention is described in detail with reference to Figs. 1 to 5.

As shown in Fig. 3, a laser beam 2 projected from a laser marker 1 marks various pattern information on the surface of a workpiece 4 on a work feeder 3 through a housing 5 provided in the laser marker 1. The laser marker 1 comprises, not shown in the figure, a laser oscillator and means for providing various pattern information to the laser beam of the prior art, a controller for controlling pattern creation and synchronously operating a work feeder, and the like.

The housing 5, as shown in Fig. 1, incorporates a reflecting mirror 51, a condenser lens 52, glass plates 53 and a movable lens 54 are stored. The reflecting mirror 51 reflects in a downward direction the laser beam 2 projected horizontally and the movable lens 54 shifts a pattern itself horizontally over the surface of the workpiece 4.

The glass plates 53 consist of three circular glass plates having different thicknesses, 53A, 53B and 53C, as shown in Fig. 2 and are fixed in the circular support plate 531 at an equal radial distance from the center and at intervals of 90°. Denoted at 53D is a hole in which no glass plate 53 is fixed.

The center axis 532 of the support plate 531 is connected to a motor 533. The motor 533 rotates or stops such that either one of the glass plates 53A, 53B and 53C and the hole 53D can be located within the laser beam path right below the condenser lens 52 by an unshown controller. That is, the motor 533, the center axis 532 and the support plate 531 constitute a first glass plate drive unit. The motor 533 of this embodiment is stored in the housing 5 together with the support plate 531, but may be arranged outside the housing 5.

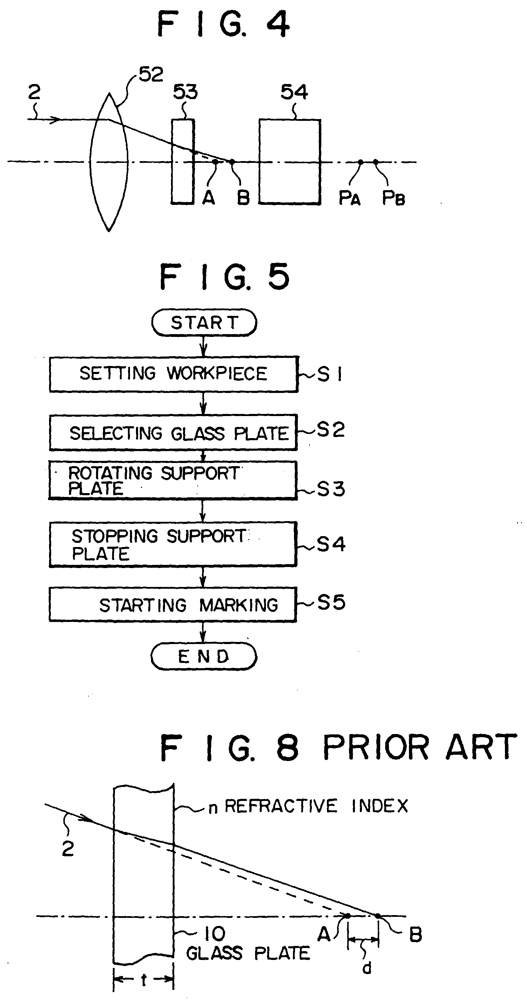

In this instance, the laser beam 2 having various pattern information, as shown in Fig. 1, is reflected by the reflecting mirror 5 and converged by the condenser lens 52. After the focusing distance of the condenser lens 52 is extended by one of the glass plates 53, the laser beam 2 passes through the movable lens 54 and the projecting glass 55 of the housing 5 and is projected onto the surface of the workpiece 4 to mark the various patterns on the surface of the workpiece 4. Referring to Fig. 4, when the image forming position of the condenser lens 52 is extended from point A to point B by one of the glass plates 53, an image formed by the movable lens 54 moves from point PA to point PB accordingly. In this embodiment, the marking height can be adjusted in four levels according to the absence of the glass plates 53 (hole 53D) and the presence of each one of the glass plates 53A, 53B and 53C.

With reference to the operation flow chart of Fig. 5, when the predetermined workpiece 4 is set (S1), a glass plate 53 corresponding to the height of the workpiece 4 is selected (S2). Thereafter, the support plate 531 is rotated by a step motor 533 such that the glass plate 53 is stopped over the laser beam path of the condenser lens 52 (S3 and S4). Marking the workpiece 4 is started (S5).

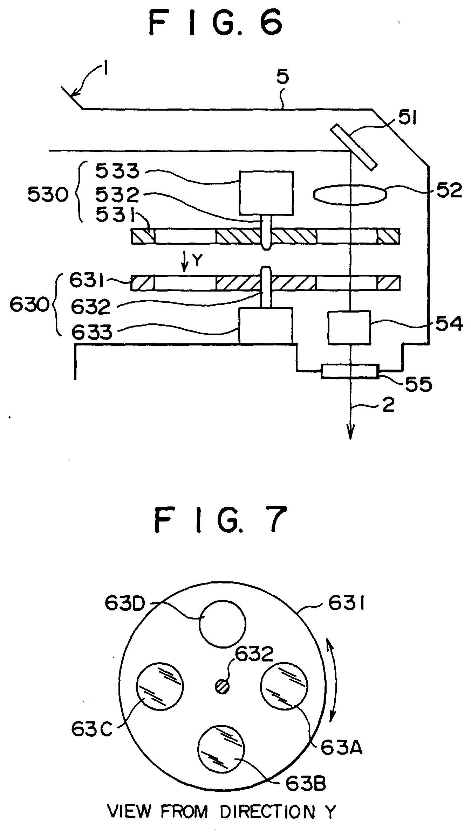

A detailed description is subsequently given of Embodiment 2 of the present invention with reference to Figs. 6 and 7. In addition to the constitution of the laser marker 1 of Embodiment 1, this embodiment comprises another circular support plate 631 provided with three circular glass plates 63A, 63B and 63C and a hole 63D and a motor 633 for rotating or stopping this support plate 631 through the center axis 632. One of the glass plates 63A, 63B and 63C and the hole 63D can be stopped and overlapped with one of the glass plates 53A, 53B and 53C and the hole 53D shown in Embodiment 1 within the laser beam path.

In this instance, when the difference of thickness among the glass plates 53A, 53B and 53C of Embodiment 1 is t1, that is, the thicknesses of the glass plates 53A, 53B and 53C are $t_1$, $2t_1$ and $3t_1$, the thicknesses of the glass plates 63A, 63B and 63C of this embodiment are 1/4, 2/4 and 3/4 of $t_1$, or $t_1/4$, $2t_1/4$ and $3t_1/4$, respectively. That is, the extension of the image forming position can be roughly adjusted by the glass plates 53A, 53B and 53C of Embodiment 1 and can be finely adjusted by the glass plates 63A, 63B and 63C of this embodiment. Therefore, a combination of these glass plates makes possible highly accurate adjustment. As a matter of course, rough adjustment or fine adjustment can be performed independently by driving the motors 533 and 633 to locate one of the holes 53D and 63D within the laser beam path.

In this embodiment, the motor 633, the center axis 632 and the support plate 631 constitute a second glass plate drive unit. The motor 633 of this embodiment is stored in the housing 5 together with the support plate 631, but may be arranged outside the housing 5.

The effects of the present invention are as follows.

(1) Since the glass plates 53 are stored in the housing 5 together with the condenser lens 52, dust is prevented from adhering to and accumulating on the coatings of the glass plates 53. Therefore, the problems of the prior art such as the burning of the coating by the laser beam 2 and deterioration in marking accuracy can be solved.

(2) When a plurality of glass plates 53A, 53B and 53C having different thicknesses are set in such a manner that they can go in and out of the laser beam path, it is inevitable that they include a glass plate which is not used frequently. However, since such a glass plate is also stored in the housing 5, dust is prevented from adhering to or accumulating on its coating regardless of its use frequency. Therefore, even a glass plate which is rarely used can be set and makes it possible to mark various types of workpieces 4.

(3) When a plurality of glass plates 63A, 63B and 63C having different thicknesses are set, separately from the plurality of glass plates 53A, 53B and 53C and in parallel to these glass plates, in such a manner they can go in and out of the laser beam path, the extension of the image forming position can be adjusted roughly or finely, or a combination of the two sets of glass plates makes possible highly accurate adjustment.

Industrial Feasibility

This invention is useful as a laser marker which is capable of quickly marking even workpieces having different marking heights without deteriorating marking accuracy.

**Claims**

1. A laser marker for marking various patterns on the surface of a workpiece 4 by projecting a laser beam 2 provided with the various pattern information onto the surface of the workpiece 4 through a condenser lens 52 and a glass plate(s) 53 for changing the focusing distance of the condenser lens, characterized in that
the glass plate(s) 53 and the condenser lens 52 are stored in a housing 5.

2. A laser marker according to claim 1 which comprises a single glass plate 53 or a plurality of glass plates 53A, 53B and 5C having different thicknesses and a first glass plate drive unit 530 for moving one of the glass plates into and out of a laser beam path.

3. A laser marker according to claim 2 which comprises the first glass plate drive unit 530 for driving the center axis 532 of the support plate 531 in which the plurality of glass plates 53A, 53B and 53C are set in such a manner that they are supported substantially on the same plane therewith, to move one of the glass plates into and out of the laser beam path.

4. A laser marker according to claim 2 which further comprises a second glass plate drive unit 630 for driving the center axis 632 of a support plate 631 in which another plurality of glass plates 63A, 63B and 63C having different thicknesses are set, separately from the glass plates 53A, 53B and 53C and in parallel to these glass plates, in such a manner that they are supported substantially on the same plane therewith, to move one of the glass plates 63A, 63B and 63C into and out of the laser beam path.

5. A laser marker according to claim 3 or 4, wherein the support plates 531 and 631 have holes 53D and 63D in which no glass plate is set, respectively.

# F I G. I

1 LASER MARKER

5 HOUSING

51 REFLECTING MIRROR

533

Z

SUPPORT 531 PLATE

52 CONDENSER LENS

53 GLASS PLATE

CENTER AXIS 532

54 MOVABLE LENS

55

530 FIRST GLASS PLATE DRIVE UNIT

2 LASER BEAM

# F I G. 2

53D

531

532

53C

53A

53B

VIEW FROM DIRECTION Z

# F I G. 3

1

5

4

2

3

# F I G. 4

# F I G. 5

START

SETTING WORKPIECE ~S1

SELECTING GLASS PLATE ~S2

ROTATING SUPPORT PLATE ~S3

STOPPING SUPPORT PLATE ~S4

STARTING MARKING ~S5

END

# F I G. 8 PRIOR ART

n REFRACTIVE INDEX

10 GLASS PLATE

7

# F I G. 6

# F I G. 7

VIEW FROM DIRECTION Y

## INTERNATIONAL SEARCH REPORT

| International application No. |
|---|
| PCT/JP96/02159 |

**A. CLASSIFICATION OF SUBJECT MATTER**

Int. Cl$^6$ B23K26/06

According to International Patent Classification (IPC) or to both national classification and IPC

**B. FIELDS SEARCHED**

Minimum documentation searched (classification system followed by classification symbols)

Int. Cl$^6$ B23K26/00-26/06

Documentation searched other than minimum documentation to the extent that such documents are included in the fields searched

Jitsuyo Shinan Koho          1926 - 1996     Jitsuyo Shinan Toroku
Kokai Jitsuyo Shinan Koho     1971 - 1995     Koho     1996
Toroku Jitsuyo Shinan Koho    1994 - 1996

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 5-8070, A (Toshiba Corp.), January 19, 1993 (19. 01. 93), Paragraphs (0011) to (0012); Fig. 2 (Family: none) | 1 - 5 |
| Y | JP, 63-173322, A (Toshiba Corp.), July 16, 1988 (16. 07. 88), Claim 1; Fig. 1 (Family: none) | 1 - 5 |
| Y | JP, 4-367386, A (Amada Co., Ltd.), December 18, 1992 (18. 12. 92), Paragraphs (0015) to (0018) (Family: none) | 4 - 5 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| October 25, 1996 (25. 10. 96) | November 5, 1996 (05. 11. 96) |

| Name and mailing address of the ISA/ | Authorized officer |
|---|---|
| Japanese Patent Office | |
| Facsimile No. | Telephone No. |

Form PCT/ISA/210 (second sheet) (July 1992)